Europäisches Patentamt

European Patent Office

Office européen des brevets

(19)

(11) Veröffentlichungsnummer: **0 146 683**
**B1**

(12) **EUROPÄISCHE PATENTSCHRIFT**

(45) Veröffentlichungstag der Patentschrift:
**19.11.87**

(21) Anmeldenummer: **84109198.6**

(22) Anmeldetag: **29.07.82**

(60) Veröffentlichungsnummer der früheren Anmeldung
nach Art. 76 EPÜ: **0085073**

(51) Int. Cl.⁴: **H 05 B 41/29**

(54) Wechselrichter.

(30) Priorität: **31.07.81 DE 3130424**
**30.09.81 DE 3138994**
**08.02.82 DE 3204225**
**28.05.82 DE 3220301**

(43) Veröffentlichungstag der Anmeldung:
**03.07.85 Patentblatt 85/27**

(45) Bekanntmachung des Hinweises auf die Patenterteilung:
**19.11.87 Patentblatt 87/47**

(84) Benannte Vertragsstaaten:
**AT BE CH DE FR GB LI NL SE**

(56) Entgegenhaltungen:
**DE - A - 2 234 190**
**GB - A - 2 061 037**

(73) Patentinhaber: **Siemens Aktiengesellschaft Berlin und
München, Wittelsbacherplatz 2, D-8000 München 2 (DE)**

(72) Erfinder: **Krönig, Armin, Dipl.-Ing., Wimpersing 1,
D-8221 Seebruck (DE)**
Erfinder: **Kerscher, Max, Am Winkelzaun 15,
D-8224 Chieming (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Wechselrichter zur Speisung eines Lastkreises oder mehrerer Lastkreise in Parallelschaltung, mit einer bistabilen Abschalteinrichtung gemäss Oberbegriff von Anspruch 1.

Ein solcher Wechselrichter ist aus der GB-A-2 061 037 bekannt. Der Wechselrichter wird hierbei durch die bistabile Abschalteinrichtung in den Abschaltzustand gesteuert, wenn eine der Entladungslampen dauernd zündunfähig ist. Dieser Abschaltzustand kann nur durch Abschalten der Stromversorgung für den Wechselrichter beendet werden. Nach dem Auswechseln einer defekten Lampe muss daher der zugehörige Wechselrichter kurz ab- und wieder eingeschaltet werden. Dies ist vor allem dann störend, wenn die einzelne Lampe zu einer grossen Beleuchtungsanordnung, beispielsweise eines Grossraumbüros, gehört, da es in diesem Fall erforderlich ist, die ganze Anlage kurz abzuschalten.

Der Erfindung liegt daher die Aufgabe zugrunde, diesen Nachteil zu beseitigen und einen Wechselrichter der eingangs genannten Art so weiterzubilden, dass der Wechselrichter nach dem Auswechseln der defekten Lampe selbsttätig wieder anschwingt.

Die erfindungsgemässe Lösung dieser Aufgabe ist dadurch gekennzeichnet, dass der Haltestromkreis der bistabilen Schalteinrichtung über eine der Elektroden der Entladungslampe jedes Lastkreises geführt ist.

Daher wird der Haltestromkreis beim Entfernen der defekten Lampe unterbrochen, so dass die bistabile Schalteinrichtung wieder in ihren Betriebszustand zurückkippen kann. Der Wechselrichter kann daher nach dem Einsetzen der neuen Lampe sofort wieder anschwingen, ohne dass es einer Netzabschaltung bedarf.

Die Erfindung wird anhand zweier Ausführungsbeispiele näher erläutert; es zeigen

Fig. 1 ein erstes Ausführungsbeispiel,
Fig. 4 ein zweites Ausführungsbeispiel.

Ein Gleichrichter G in Zweiwegschaltung, der eingangsseitig über ein nicht dargestelltes Filter von einem Wechselspannungsnetz (220 Volt/50 Hertz) gespeist wird und ein daran angeschlossener Hochsetzsteller mit Ladedrossel L, Ladediode D, Ladeschalter T1, T2 und einem Ladekondensator C bilden eine Gleichspannungsquelle mit regelbarer Gleichspannung. An den Ladekondensator ist die Reihenschaltung aus zwei abwechselnd durchschaltenden Transistoren eines Wechselrichters angeschlossen; der der Ladediode D benachbarte Transistor T3 wird im folgenden als Sekundärtransistor und der andere Transistor T1 als Primärtransistor bezeichnet. Parallel zu dem Sekundärtransistor T3 liegt ein Lastkreis mit einer Entladungslampe E, einem Serienresonanzkreis C2, L2, einem Umschwingkondensator C1 und der Primärwicklung L30 eines Sättigungstransformators in Reihenschaltung, wobei der Kondensator C2 des Serienresonanzkreises zwischen den beiden vorheizbaren Elektroden der Entladungslampe E liegt, die mit einer Elektrode direkt an den Ladekondensator C angeschlossen ist.

Der Sättigungstransformator weist zwei Sekundärwicklungen L31, L32 sowie eine Abschaltwicklung L33 auf; die Sekundärwicklungen L31, L32 sind derart in die Steuerkreise von Primär- und Sekundärtransistor T1, T3 geschaltet, dass diese jeweils während der Ummagnetisierungszeit des Sättigungstransformators abwechselnd durchgesteuert werden. Hierbei ist der Sättigungstransformator so bemessen, dass die durch ihn bestimmte Betriebsfrequenz des Wechselrichters etwas über der Resonanzfrequenz des Serienresonanzkreises liegt: Dadurch entstehen Lücken zwischen aufeinanderfolgenden Durchsteuerimpulsen, so dass ein gleichzeitiges Leiten von Primär- und Sekundärtransistor und damit ein Kurzschluss der Spannung an dem Ladekondensator C ausgeschlossen ist. Für die Stromführung während der gleichzeitigen Sperrung beider Transistoren sind Rückstromdioden D1, D2 parallel zu jedem der Transistoren vorgesehen. Während der Durchschaltezeit des Primärtransistors T1 liegt die Spannung des Ladekondensators C an dem Lastzweig und führt zu einer Aufladung des Umschwingkondensators C1 mit der in der Figur angegebenen Polarität. Nach dem Sperren von T1 fliesst der Strom über den Lastzweig, getrieben durch die Drossel L2 des Serienresonanzkreises, über die Rückstromdiode D2 weiter, bis T3 durchschaltet: Dann entlädt sich der Umschwingkondensator C1 über T3 und den Lastzweig, bis T3 wieder sperrt. Danach fliesst der Laststrom in der gleichen Richtung über den Ladekondensator C und Rückstromdiode D1 bis zur erneuten Durchschaltung von T1 weiter.

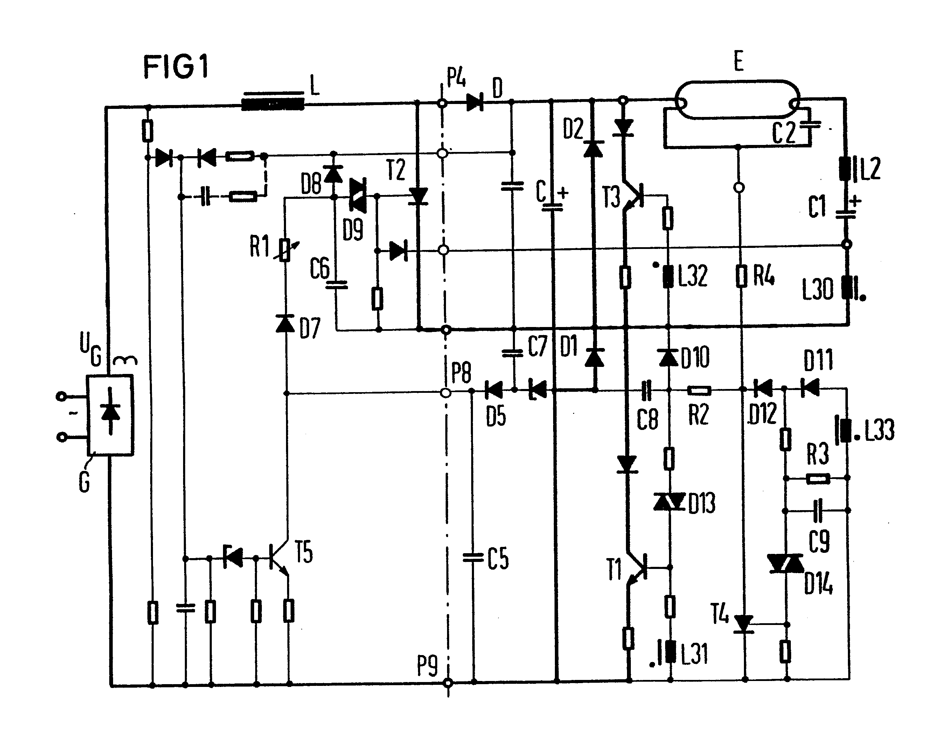

Die beim Betrieb des Wechselrichters dem Ladekondensator C entnommene Energie wird diesem vom Gleichrichter G über die Ladedrossel L und die Ladediode D zugeführt. Beim Ausführungsbeispiel nach Fig. 1 bilden hierzu der Primärtransistor T1 und ein Ladethyristor T2 in Serienschaltung einen Ladeschalter, über den die Ladedrossel L dem Gleichrichter G parallel geschaltet ist.

Der Ladethyristor T2 wird synchron zu den Umschaltvorgängen des Wechselrichters gesteuert. Hierzu liegt dessen Steuerstrecke über eine Trigger-Diode D9 einem Verzögerungskondensator C6 parallel, der einerseits über eine Entladediode D8 parallel zu dem Sekundärtransistor T3 liegt und über den Primärtransistor T1, einen einstellbaren Entladewiderstand R1 und eine Entkopplungsdiode D7 an eine Steuerspannungsquelle angeschlossen ist. Letztere besteht aus einem Steuertransistor T5 und einem parallel dazu angeordnetem Speicherkondensator C5, der zusammen mit einer Diode D5 und einem Teilerkondensator C7 einen dem Primärtransistor T1 parallel liegenden Spannungsteiler bildet.

Der Umschwingwechselrichter und anschliessend der Hochsetzsteller beginnen erst zu arbeiten, wenn die Spannung an einem Startkondensator C8 einen solchen Wert erreicht hat, dass seine Energie über eine Trigger-Diode D13 auf die Steuerstrecke des Primärtransistors T1 geschaltet wird und dieser damit durchschaltet. Der Startkondensator C8 liegt hierzu einerseits über Widerstände R2, R4 und eine Elektrode der Lampe E an dem Ladekondensator C und andererseits über eine Diode D10 parallel zur Schaltstrecke des Primärtransistors T1: Nach dem Anlegen der Netzwechselspannung an den Gleichrichter lädt sich der Ladekondensator C über Ladedrossel und Ladediode und damit auch der Startkondensator C8 auf, bis der Primärtransistor T1 durchgezündet wird; dann wird zugleich der Startkondensator über D10 wieder entladen, so dass diese Startschaltung während des periodischen Schwingens des Wechselrichters nicht mehr eingreifen kann.

Zur Abschaltung des Umrichters, wenn die Entladungslampe dauernd startunwillig ist, es also nur zu wiederholten, erfolglosen Startversuchen kommt, dient eine bistabile Schalteinrichtung in Form eines Stop-Thyristors T4 mit einem Abschalt- und einem Betriebszustand sowie einem Steuerkreis und einem Haltestromkreis. Die Schaltstrecke des Stop-Thyristors ist über Dioden D11, D12 einer Abschaltwicklung L33 des Sättigungstransformators und dem Startkondensator C8 über R2 parallelgeschaltet; sie liegt ferner in dem Haltestromkreis in Reihe mit der dem Ladekondensator C benachbarten Elektrode der Entladungslampe und einem Vorwiderstand R4.

An die Abschaltwicklung L33 ist über die Diode D11 auch ein Steuerstromkreis mit einem RC-Glied R3, C9 in Parallelschaltung angeschlossen, das wiederum über eine Trigger-Diode D14 der Steuerstrecke des Stop-Thyristors T4 parallel liegt. Die Funktion und Bemessung dieser Schaltung basiert auf der Tatsache, dass die Amplitude des über den Lastzweig mit der Entladungslampe fliessenden und von der Abschaltwicklung L33 erfassten Stromes bei ungezündeter Lampe (Resonanzfall) wesentlich grösser ist als bei gezündeter Lampe (gedämpfter Resonanzkreis): Nach einer durch die Bemessung vorgebbaren Anzahl vergeblicher Startversuche hat sich C9 so weit aufgeladen, dass der Stop-Thyristor T4 über die Trigger-Diode D14 durchzündet und die Abschaltwicklung L33 kurzschliesst. Damit entfallen die Steuerspannungen für die Transistoren des Wechselrichters und der Betrieb des Wechselrichters ist unterbrochen. Zu einer solchen Abschaltung führen jedoch weder die normalen Zündversuche noch der normale Lampenstrom, da hierbei die Spannung an C9 nicht den zur Durchsteuerung der Trigger-Diode D14 erforderlichen Wert erreicht.

Wegen der Synchronsteuerung des Hochsetzstellers abhängig von der Rechteckspannung an den Schaltern des Wechselrichters, wird der Hochsetzsteller automatisch mit dem Wechselrichter ab- und nach dem Start des Wechselrichters wieder eingeschaltet.

Der Wechselrichter bleibt abgeschaltet, bis der Haltestromkreis des Stop-Thyristors T4 unterbrochen wird und dieser daher wieder in den Sperrzustand übergehen kann. Hierzu kann beispielsweise die Netzwechselspannung abgeschaltet werden. Sehr häufig ist jedoch eine Abschaltung das Resultat einer schadhaften Lampe, die ohne Abschaltung der Netzspannung gewechselt werden kann. Da auch der Stromkreis des Startkondensators C8 über eine Elektrode der Lampe geführt ist, schwingt der Umrichter nach dem Einsetzen einer neuen Lampe automatisch wieder an.

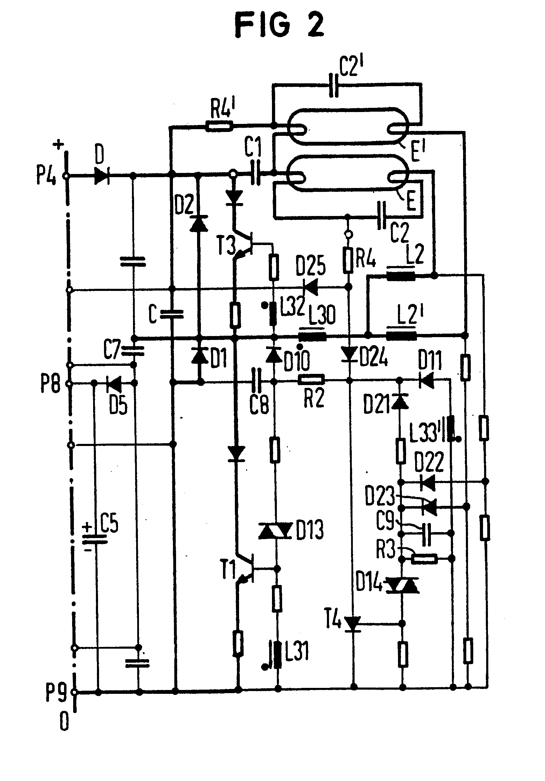

Das zweite Ausführungsbeispiel nach Fig. 2 wird im folgenden nur soweit behandelt, wie sich der Wechselrichterteil von dem in Fig. 1 unterscheidet:

Der Wechselrichter — rechts der strichpunktierten Linie mit den Anschlusspunkten P4, P8, P9 — ist in diesem Ausführungsbeispiel mit zwei parallel geschalteten Lastkreisen mit je einer Lampe E, E' und einem zugeordneten Serienresonanzkreis C2, L2 und C2', L2' belastet. Wichtig ist hierbei die symmetrische Speisung der Lastkreise, bei der der Umschwingkondensator C1 am Verbindungspunkt der Elektroden der beiden Lampen angeschlossen ist. Der Haltestromkreis des Stop-Thyristors T4 und der Aufladekreis für den Startkondensator C8 verläuft dagegen über R4, R4' und die unmittelbar in Reihe geschalteten Elektroden der Lampen.

Zur Abschaltung bei dauernd zündunwilliger Lampe werden hier die Spannungen an den Drosseln L2, L2' der Serienresonanzkreise ausgewertet und über Spannungsteiler und Entkopplungsdioden D22, D23 nach Art eines ODER-Gatters dem RC-Glied C9, R3 zugeführt. Diese Spannungen sind bei dauernd zündunwilliger Lampe — im Resonanzfall — so gross, dass der Stop-Thyristor T4 über die Trigger-Diode D14 gezündet wird, der dann bis zu einem Auswechseln der schadhaften Lampe durchgesteuert bleibt. Er schliesst damit die Abschaltwicklung L33' des Sättigungstransformators über Diode D11 und den Startkondensator C8 kurz und schaltet so den Wechselrichter ab. Da die Dioden D22 und D23 nach Art eines ODER-Gatters an das RC-Glied R3, C9 angeschlossen sind, kann die Abschaltbedingung durch jede der beiden parallel geschalteten Lampen — oder auch durch beide gleichzeitig — herbeigeführt werden.

Der Abschaltzustand bleibt erhalten, bis eine der beiden Lampen ausgewechselt und dadurch der Haltestromkreis von T4 unterbrochen wird. Mit dem Einsetzen einer neuen Lampe kann sich dann der Startkondensator C8 über R2, R4 und die in Reihe geschalteten Elektroden der beiden Lampen E, E' aufladen, so dass zunächst der Wechselrichter wieder anschwingt; kurz danach stehen ausreichend grosse Betriebsspannungen an C5 für den Hochsetzsteller zur Verfügung, so dass auch dieser automatisch den Betrieb wieder aufnimmt.

Eine gealterte Lampe verhält sich wie ein Gleichrichter, ohne dass zuvor die Polarität festliegen würde. Dementsprechend kann an dem Umschwingkondensator C1 eine sehr hohe positive oder negative Spannung von rund 1000 V auftreten, durch die die Überwachungsschaltung, insbesondere der Stop-Thyristor T4 gefährdet wäre. Daher dient eine Schutz-Diode D24 in Reihe zu T4 zum Schutz bei negativer Überspannung an C1; eine Diode D25 hält dagegen das Potential bei positiver Überspannung auf dem Wert der Spannung an dem Ladekondensator C.

Weitere Einzelheiten des Wechselrichters sind in der Stammanmeldung (Veröffentlichungs-Nr. 0 085 073), aus der die vorliegende Teilanmeldung hervorgegangen ist, beansprucht.

**Patentansprüche:**

1. Wechselrichter zur Speisung eines Lastkreises oder mehrerer Lastkreise in Parallelschaltung, wobei jeder Lastkreis einen Serienresonanzkreis und eine Entladungslampe (E, E') mit heizbaren Elektroden aufweist und die Elektroden so in dem Lastkreis liegen, dass der Kondensator (C2) des Serienresonanzkreises zwischen den beiden Elektroden der Entladungslampe angeordnet ist,

mit zwei abwechselnd periodisch schaltenden Schaltern (T1, T3), von denen einer (T1) zwischen dem Lastkreis bzw. den Lastkreisen und einer Gleichspannungsquelle und der andere (T3) parallel zu dem Lastkreis liegt,

mit einer bistabilen Schalteinrichtung (T4) mit einem Betriebs- und einem Abschaltzustand,

mit einem Steuerstromkreis für die bistabile Schalteinrichtung, in dem in Parallelschaltung ein RC-Glied (R3, C9) angeordnet ist, das an die Lastkreise angekoppelt und so bemessen ist, dass die Schalteinrichtung bei einer nichtzündenden Entladungslampe (E, E') in den Abschaltzustand kippt und den Wechselrichter abschaltet,

mit einem Haltestromkreis, der die bistabile Schalteinrichtung in ihrem Abschaltzustand hält, dadurch gekennzeichnet, dass der Haltestromkreis über eine der Elektroden der Entladungslampe jedes Lastkreises geführt ist.

2. Wechselrichter nach Anspruch 1, gekennzeichnet durch einen Startkondensator (C8), dessen Ladekreis über eine Elektrode der Entladungslampe (E, E') jedes Lastkreises geführt ist und der über eine Trigger-Diode (D13) parallel zur Steuerstrecke eines Schalters (T1) des Wechselrichters und über eine Entladediode (D10) parallel zu dessen Schaltstrecke liegt.

3. Wechselrichter nach Anspruch 1 oder 2, dadurch gekennzeichnet, dass als bistabile Schalteinrichtung ein Stop-Thyristor (T4) dient, dessen Schaltstrecke in dem Haltestromkreis angeordnet ist und dessen Steuerstrecke über eine Trigger-Diode (D14) an das RC-Glied (R3, C9) angeschlossen ist und dass die Schaltstrecke des Stop-Thyristors über Entkopplungsdioden (D11, D21) einen Kurzschluss des RC-Gliedes und einer Abschaltwicklung (L33') eines die Schalter des Wechselrichters steuernden Sättigungstransformators (L30) bewirkt.

4. Wechselrichter nach Anspruch 3, dadurch gekennzeichnet, dass im Haltestromkreis dem Stop-Thyristor (T4) eine Schutzdiode (D24) vorgeschaltet ist und dass die Reihenschaltung aus Schutzdiode (D24) und Stop-Thyristor (T4) über eine derart gepolte Diode (D25) der Gleichspannungsquelle parallel geschaltet ist, dass dadurch die Spannung an dem Stop-Thyristor auf die Spannung der Gleichspannungsquelle begrenzt bleibt.

**Claims**

1. A d.c./a.c. converter for feeding one load circuit or a plurality of load circuits connected in parallel, where each load circuit has a series resonant circuit and a discharge lamp (E, E') with heatable electrodes, and the electrodes are arranged in the load circuit with the capacitor (C2) of the series resonant circuit arranged between the two electrodes of the discharge lamp;

with two switches (T1, T3) which switch periodically in alternation, of which one (T1) is arranged between the load circuit or load circuits and a direct voltage source and the other one (T3) is arranged parallel to the load circuit;

with a bistable switching device (T4) having an operating state and a blocking state;

with a control circuit for the bistable switching device, wherein an RC-element (R3, C9) is arranged as a parallel combination coupled to the load circuits and dimensioned such that in the event of a discharge lamp (E, E') not igniting, the switching device trips into the blocking state and disconnects the d.c./a.c. converter; and

with a holding circuit which maintains the bistable switching device in its blocking state; characterised in that the holding circuit is passed via one of the electrodes of the discharge lamp of each load circuit.

2. A d.c./a.c. converter as claimed in Claim 1, characterised by a start capacitor (C8), whose load circuit is passed via an electrode of the discharge lamp (E, E') of each load cicuit and is arranged parallel to the control path of a switch (T1) of the d.c./a.c. converter by means of a trigger diode (D13) and parallel to the switching path thereof by means of a discharge diode (D10).

3. A d.c./a.c. converter as claimed in Claim 1 or 2, characterised in that a stop thyristor (T4) serves as a bistable switching device, whose switching path is arranged in the maintaining circuit and whose control path is connected to the RC-element (R3, C9) by a trigger diode (D14), and that the switching path of the stop thyristor effects via decoupling diodes (D11, D21) a short-circuit of the RC-element and of a disconnecting winding (L33') of a saturation transformer (L30) which controls the switches of the d.c./a.c. converter.

4. A d.c./a.c. converter as claimed in Claim 3, characterised in that the stop thyristor (T4) is preceded by a protective diode (D24) in the maintaining circuit and that the series connection consisting of the protective diode (D24) and stop thyristor (T4) is switched in parallel to the direct voltage source by means of a diode (D25) poled such that the voltage in the stop thyristor thereby remains restricted to the voltage of the direct voltage source.

**Revendications**

1. Onduleur pour l'alimentation d'un circuit de charge ou de plusieurs circuits de charge montés en parallèle, chaque circuit de charge présentant un circuit à résonance série et une lampe à décharge (E, E') avec des électrodes chauffées, lesquelles sont connectées dans le circuit de charge avec le condensateur (C2) du circuit à résonance série entre elles, l'onduleur comprenant

deux interrupteurs (T1, T3) commutés périodiquement et alternativement, dont l'un (T1) est connecté entre le circuit de charge ou les circuits de charge et une source de tension continue et l'autre (T3) est connecté en parallèle avec le circuit de charge,

un dispositif de commutation bistable (T1), ayant un état de fonctionnement et un état d'arrêt,

un circuit de commande pour le dispositif de commutation bistable, circuit qui contient, en montage parallèle, une combinaison résistance-capacité (R3, C9) qui est couplée aux circuit de charge et est dimensionnée de manière que le dispositif de commutation bascule à l'état d'arrêt et arrête l'onduleur au cas où une lampe à décharge ne s'allume pas et

un circuit de maintien qui maintient le dispositif de commutation à son état d'arrêt, caractérisé en ce que le circuit de maintien passe par l'une des électrodes de la lampe à décharge de chaque circuit de charge.

2. Onduleur selon la revendication 1, caractérisé par un condensateur de démarrage (C8) dont le circuit de charge de condensateur passe par une électrode de la lampe à décharge (E, E') de chaque circuit de charge et qui est connecté en parallèle avec le circuit de commande d'un interrupteur (T1) de l'onduleur à travers une diode de déclenchement (D13), et en parallèle avec le circuit de commutation de cet interrupteur à travers une diode de décharge (D10).

3. Onduleur selon la revendication 1 ou 2, caractérisé en ce que le dispositif de commutation bistable est un thyristor d'arrêt (T4) dont le circuit de commutation est disposé dans le circuit de maintien et dont le circuit de commande est connecté à travers une diode de déclenchement (D14) à la combinaison résistance-capacité (R3, C9), et que le circuit de commutation du thyristor d'arrêt provoque, à travers des diodes de découplage (D11, D21), un court-circuit de la combinaison résistance-capacité et d'un enroulement d'arrêt (L33') d'un transformateur saturé (L30) commandant les interrupteurs de l'onduleur.

4. Onduleur selon la revendication 3, caractérisé en ce qu'une diode de protection (D24) est interposée en avant du thyristor d'arrêt (T4) dans le circuit de maintien et que le montage en série de la diode de protection (D24) et du thyristor d'arrêt (T4) est connecté en parallèle avec la source de tension continue par un diode (D25) de polarité telle que la tension sur le thyristor d'arrêt reste ainsi limitée à la tension de la source de tension continue.

FIG1

0 146 683

# FIG 2